# EUROPÄISCHE PATENTANMELDUNG

(11) **EP 1 120 204 A2**
(43) Veröffentlichungstag der Anmeldung: **01.08.2001**
(21) Anmeldenummer: 01101604.5
(22) Anmeldetag: 25.01.2001
(51) Int. Cl.: B25J 9/16

(54) **Verfahren zum Einmessen eines Industrieroboters**

(30) Priorität: 28.01.2000 DE 10003611
(71) Anmelder: Dürr Systems GmbH, 74321 Bietigheim-Bissingen (DE)
(72) Erfinder: Meissner, Alexander, Dr., 70193 Stuttgart (DE)
(74) Vertreter: Dreiss, Fuhlendorf, Steimle & Becker

(57) **Zusammenfassung**

Verfahren zum Einmessen eines Roboters mit mehr als drei Achsen, insbesondere eines sechsachsigen Industrieroboters, insbesondere eines Lackierroboters, mit einer Roboterbasis, wobei mit einer relativ zur Roboterbasis kalibrierten Meßspitze des Roboters N ≥ drei Referenzmarken (A-D) mit bekannten absoluten Koordinaten (R_{A}, R_{B}, R_{C}, R_{D}) angefahren werden und mittels dieser Referenzmarken (A, B, C, D) die Pose des Roboters bestimmt werden kann.

## Beschreibung

Die Erfindung betrifft ein Verfahren zum Einmessen eines Industrieroboters mit mehr als drei, insbesondere mit sechs Achsen, insbesondere eines Lackierroboters, mit einer Roboterbasis und einer relativ zur Roboterbasis kalibrierten Meßspitze.

Industrieroboter werden vor der Programmierung relativ zur Roboterzelle bzw. zum Bearbeitungsobjekt z. B. einer Karosse bzw. einer Lackierkabine vermessen.

Die Vermessung des Roboters bzw. der Roboterbasis findet derzeit relativ zu einem Bezugssystem durch photogrammetrische Systeme bzw. optische Systeme mit Lichtlaufzeitmessung statt. Dabei werden Meßmarken am Roboter-TCP ("Tool Center Point") bzw. am Roboter selbst angebracht, deren Lage vom Meßsystem erkannt wird. Aus den Lagen der Meßpunkte im Bezugssystem sowie der Lagen im relativen Robotersystem wird die Lage des Roboters mittels Koordinatentransformation zwischen Bezugssystem und Robotersystem bestimmt.

Nachteilig bei dieser Technik ist, daß relativ teures Meßequipment benötigt wird. Darüber hinaus sind die Meßergebnisse nicht sofort verwendbar, sondern liegen erst nach zeitaufwendigen Entwicklungs- und Auswertearbeiten vor.

Darüber hinaus hängt die erreichbare Meßgenauigkeit von einer Reihe von Faktoren ab, z. B. Beleuchtung, Photomaterialentwicklung sowie von subjektiven Faktoren bei der Auswertung (insbesondere Anpaßunsicherheiten), die nur unvollkommen erfaßbar sind, woraus eine große Streubreite in den Angaben bei Meßunsicherheiten resultieren. Darüber hinaus besteht eine relativ hohe Fehleranfälligkeit bei optischen Meßsystemen mit Photodioden bei Sonnenlicht bzw. bei Licht mit hohem Infrarotanteil. Schließlich ist der zeitliche Aufwand für die Feinmessung beträchtlich.

Bei dem einzumessenden Roboter handelt es sich dabei um einen bereits kalibrierten mehrachsigen, nämlich insbesondere sechsachsigen, Manipulator, wobei ein Kalibrierverfahren für einen derartigen Manipulator beispielsweise aus der DE 196 16 276 A1 bekannt ist. Diese zeigt ein Verfahren und eine Vorrichtung zum Vermessen und Kalibrieren eines mehrachsigen Industrieroboters mit einer Vermessungseinrichtung, welche aus einem Meßkörper und einer Meßvorrichtung besteht, wobei der Meßkörper und der Roboter einen gemeinsamen Bezugsort besitzen, an dem sie lösbar und austauschbar angeordnet sind. An diesem Bezugsort wird zunächst der Meßkörper vermessen, anschließend gegen den Roboter ausgetauscht und an der Roboterhand befestigt.

Der Roboter wird dann in seine Grundposition mit angenommener Nullstellung seiner Achsen bewegt, dort vermessen und anschließend in eine vorgegebene Meßposition verfahren, in der der Meßkörper erneut vermessen wird. Anschließend werden die Ist-Lage des Meßkörpers in der Meßposition und seine Soll-Lage verglichen, wobei aus den Lageabweichungen die Stellungsdifferenzen zwischen angenommener und tatsächlicher Nullstellung des Roboters ermittelt werden. Unter Berücksichtigung der Stellungsdifferenzen wird dann der Roboter in die tatsächliche Nullstellung gefahren und mit seinen Achsen dort kalibriert.

Eine derartige Kalibrierung ist notwendig, damit der tatsächliche Roboter, der aufgrund von z. B. Fertigungsunterschieden Abweichungen von der Optimallage besitzen kann, mit dem steuerungstechnischen Robotermodell übereinstimmt. Ein derartiges Nachführen im internen Robotermodell der tatsächlichen Gegebenheiten ist notwendig, bevor der Arbeitspunkt und die Arbeitslage eines Roboters in einem übergeordneten System, beispielsweise einer Lackierkabine, bestimmt, also vermessen werden können.

Hierbei läßt sich der Arbeitspunkt verhältnismäßig einfach bestimmen. So beschreibt beispielsweise DE 195 07 227 C1 ein Verfahren zum Bestimmen eines Arbeitspunktes eines automatischen in einem kartesischen Koordinatensystem bewegbaren Werkzeugs. Bei dem in dem Dokument vorgestellten Verfahren läßt sich der Arbeitspunkt eines automatisch entlang einer Meß-Raumachse und mindestens einer relativ zur Meß-Raumachse definiert ausgerichteten weiteren Raumachse bewegbaren Werkzeuges, dessen Position lediglich auf der Meß-Raumachse meßtechnisch erfaßbar ist, kalibrieren.

Das vorgestellte Verfahren besitzt jedoch den Nachteil, daß hierdurch lediglich der Arbeitspunkt, nicht jedoch die Arbeitslage und damit die Pose dieses Roboters bestimmt werden kann. Unter Pose wird dabei die Kombination von Position und Orientierung im Raum verstanden. Derartig einfache Einmessungen lassen sich auf Roboter mit mehr als drei Achsen, z. B. sechsachsige Industrieroboter nicht übertragen.

Es ist daher Aufgabe der Erfindung, ein Verfahren zum Einmessen eines Roboters mit mehr als drei Achsen, insbesondere mit sechs Achsen, insbesondere eines Lackierroboters, bereitzustellen, bei dem kein zusätzliches Meßequipment benötigt wird und gleichzeitig eine einfache und genaue Einmessung des Roboters in absolute Koordinaten ermöglicht wird.

Die Erfindung löst diese Aufgabe durch Bereitstellung eines Verfahrens zum Einmessen eines Roboters mit mehr als drei Achsen, insbesondere mit sechs Achsen, insbesondere eines Lackierroboters mit einer Roboterbasis, wobei mit einer relativ zur Roboterbasis kalibrierten Meßspitze des Roboters N ≥ drei Referenzmarken mit bekannten absoluten Koordinaten angefahren werden und mittels dieser Referenzmarken die absoluten Koordinaten des Roboters und damit dessen Pose bestimmt wird.

Die Lage der kalibrierten Meßspitze, die sich in der Regel an der Roboter-TCP befindet, ist zunächst relativ zur Roboterbasis kalibriert worden und bekannt. Mit dieser in aller Regel geraden Meßspitze werden drei oder mehr Referenzmarken angefahren, deren Lage im Raum vorher bestimmt wurde und ebenfalls bekannt ist. D. h. für diese Referenzmarken liegen absolute Koordinaten oder Weltkoordinaten vor, d. h. ihre Lagen in der Roboterzelle beispielsweise in einer Lackierkabine sind bekannt. Wird nun die Meßspitze auf eine der Referenzmarken gefahren, so können die relativen Koordinaten der Meßspitze bzw. des Roboter-TCP zur Roboterbasis mit denen der absoluten Koordinaten der Referenzmarken verglichen werden, so daß mittels Koordinatentransformation eine Überführung der relativen Koordinaten des Roboters bzw. der Roboterbasis in absolute Koordinaten, also Koordinaten z. B. der Lackierkabine überführt wird.

Durch das Anfahren von mindestens drei Meßpunkten werden neun Koordinaten erhalten, wobei die Meßgenauigkeit und Sicherheit durch Anfahren weiterer Referenzmarken erhöht wird, wodurch zwölf oder fünfzehn Koordinaten erhalten werden. Über diese mindestens neun erhaltenen Koordinaten können die freien Parameter bestimmt werden und es kann so die Pose des Roboters, d. h. der Arbeitspunkt und seine Lage bzw. Orientierung über die drei Koordinaten X, Y, und Z sowie die Orientierungskoordinaten erhalten werden.

Darüber hinaus bietet dieses Einmeßverfahren den Vorteil, daß kein zusätzliches Meßequipment benötigt wird, der Roboter sich vielmehr selbst einmißt. Darüber hinaus wird die Positioniergenauigkeit des Roboters in den absoluten Koordinaten erhöht, da der (Rest-) Fehler eines kalbrierten Roboters von der Transformation aufgenommen wird.

Schließlich wird durch den erheblich schnelleren Verfahrensablauf der zeitliche Aufwand zum Einmessen des Roboters vermindert.

Das Verfahren ist auch für Roboter mit mehr als sechs Achsen, sogenannte "redundante Roboter" geeignet.

Die Koordinatentransformation kann mittels der Methode der kleinsten Fehlerquadrate durchgeführt werden ("base fitting module"). Insbesondere kann die Vermessung innerhalb einer Lackierkabine, insbesondere relativ zur Karosse erfolgen.

Neben dem Einmessen von Manipulatoren und Robotern in ein Bezugskoordinatensystem können auch andere Objekte (Bearbeitungsobjekte mit lokalem Koordinatensystem) im Bezugskoordinatensystem mit hoher Positioniergenauigkeit und relativ zum Roboter eingemessen und darüber hinaus ihre absoluten Koordinaten bestimmt werden. So kann beispielsweise eine in der Lackierkabine befindliche Karosse mittels des Roboters hinsichtlich ihrer Lage genau definiert werden. Die Hersteller sehen zumeist in der Vorderachse einen sogenannten "Karossenursprung" vor. Es werden nun drei Punkte am Auto vermessen, deren Lage relativ zum Karossenursprung definiert ist. Mittels dieser drei Punkte und der daraus gewonnenen Koordinaten läßt sich die Lage der Achse sowie des Autos in der Lackierkabine bestimmen.

Weitere Merkmale der Erfindung ergeben sich aus den Patentansprüchen sowie den übrigen Anmeldungsunterlagen.

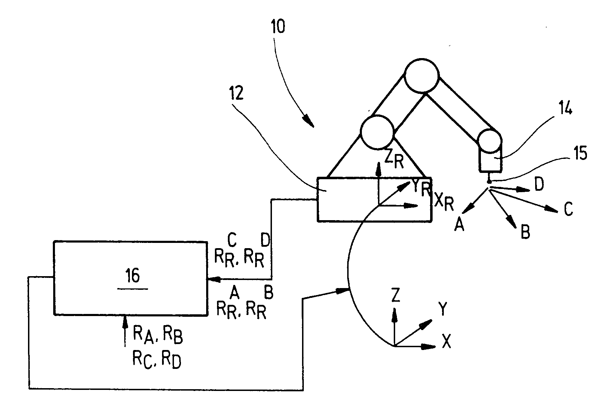

Anhand der Zeichnung soll nun ein Ausführungsbeispiel der Erfindung näher erläutert werden.

Die Zeichnung zeigt einen Roboter 10 mit einer Roboterbasis 12, einem Roboter-TCP 14 mit einer Meßspitze 15 sowie die Einheit zur Berechnung der Koordinatentransformation (base fitting module) 16. Der Roboter 10 mit seinem TCP 14 ist relativ zu seiner Basis 12 kalibriert, die Abmessungen der Meßspitze 15 sind bekannt.

In der Ausgangssituation befindet sich die Roboterbasis 12 hinsichtlich ihrer Arbeitspose in einer beliebigen Pose gegenüber einem übergeordneten Koordinatensystem. Die Position der vier Referenzpunkte ist hinsichtlich der Koordinaten X, Y, Z im übergeordneten Koordinatensystem bekannt.

Die Koordinaten der Roboterbasis X_{R}, Y_{R}, Z_{R} werden auf Null gesetzt. Aus dieser Nullposition heraus werden mit der Meßspitze des Roboter-TCP 14 die vier Meßpunkte (Referenzpunkte A, B, C, D) angefahren. Die Koordinaten der mit dem Roboter 10 angefahrenen Referenzpunkte werden dokumentiert. Die relativen Koordinaten RR_{A}, RR_{B}, RR_{C}, RR_{D} der Referenzpunkte liegen dann automatisch in Abhängigkeit von den Koordinaten X_{R}, Y_{R}, Z_{R} der Roboterbasis 14 vor.

Die relativen Koordinaten RR_{A} bis RR_{D} werden mit Hilfe des Base Fitting Module 16 (programmierbare Recheneinheit) unter Zuhilfenahme der bekannten absoluten Koordinaten R_{A}, R_{B}, R_{C}, R_{D}, welche die absolute Lage der Referenzpunkte im Raum bzw. relativ zum Bearbeitungsobjekt in der Roboterzelle angeben, einer Koordinatentransformation unterzogen, wobei die relativen Koordinaten des Roboters 10 in absolute Koordinaten X, Y, Z relativ zur Roboterzelle überführt werden. Hierdurch wird die relative Pose zwischen der momentanen Arbeitspose des Roboters und dem übergeordneten Koordinatensystem bestimmt.

Schließlich wird die Arbeitspose des Roboters 10 in das darübergeordnete Koordinatensystem korrigiert.

Auf diese Weise läßt sich ohne zusätzliches Meßequipment die Einmessung des Roboters 10 relativ zur Roboterzelle bzw. zum Bearbeitungsobjekt erreichen, wobei der Roboter 10 im wesentlichen selbst für seine Einmessung sowie die Einmessung anderer Objekte in der Roboterzelle verantwortlich ist.

## Patentansprüche

1. Verfahren zum Einmessen eines Roboters mit mehr als drei Achsen, insbesondere eines sechsachsigen Industrieroboters (10), insbesondere eines Lackierroboters, mit einer Roboterbasis (12), wobei mit einer relativ zur Roboterbasis (12) kalibrierten Meßspitze (14) des Roboters (10) N ≥ drei Referenzmarken (A-D) mit bekannten absoluten Koordinaten (R_{A}, RB_{B}, R_{C}, R_{D}) angefahren werden und mittels dieser Referenzmarken (A, B, C, D) die Pose des Roboters (10) bestimmt werden kann.

2. Verfahren nach Anspruch 1, dadurch
gekennzeichnet, daß die relativen Koordinaten des Roboters (10) für die Referenzmarken (A, B, C, D) mittels Koordinatentransformation in absolute Koordinaten überführt werden.

3. Verfahren nach Anspruch 1 oder 2, dadurch gekennzeichnet, daß die Methode der kleinsten Fehlerquadrate zur Koordinatentransformation verwendet wird.

4. Verfahren nach einem der Ansprüche 1 bis 3,
dadurch gekennzeichnet, daß die Vermessung von Bearbeitungsobjekten mit relativen Koordinaten in einer Roboterzelle, insbesondere einer Karosse innerhalb einer Lackierkabine erfolgt, indem an dem Objekt N ≥ drei Marken angefahren werden, deren relative Koordinaten bekannt sind und darüber die absoluten Koordinaten bzw. die Pose des Objekts bestimmt wird.
